# FASCICULE DE BREVET EUROPEEN

(11) **EP 1 231 422 B1**
(45) Date de publication et mention de la délivrance du brevet: **09.04.2008**
(21) Numéro de dépôt: 02290313.2
(22) Date de dépôt: 08.02.2002
(51) Int. Cl.: F16L 3/10, F16L 3/237, F16B 41/00

(54) **Procédé pour rendre une vis imperdable, collier de fixation de tuyauteries et utilisation du procédé pour fabriquer les colliers**
Verfahren zur Herstellung einer unverlierbaren Schraube, Fixierungstellringe für Rohrleitungen und Gebrauch von dem Prozess, die Stellringe herzustellen
Process for making a screw unloseable, fixation collars for pipes and use of the process to manufacture the collars

(30) Priorité: 08.02.2001 FR 0101954
(43) Date de publication de la demande: 14.08.2002
(73) Titulaire: ATELIERS ELECTRIQUES ET METALLURGIQUES DU LOIRET, F-45130 Meung-Sur-Loire (FR)
(72) Inventeur: Lepinoy, Alain, 45130 Meung sur Loire (FR)
(74) Mandataire: Debay, Yves

(56) Documents cités:
- DE-C- 861 940
- DE-U- 1 888 009
- DE-U- 29 704 512
- FR-A- 1 183 104
- FR-A- 2 643 438
- US-A- 5 524 330

## Description

La présente invention concerne un collier de fixation simple ou double d'éléments cylindriques, notamment de tuyauteries, sur un support fixe. L'invention concerne plus particulièrement un collier de fixation muni d'un dispositif d'assemblage à vis imperdables et le procédé pour parvenir à ce résultat.

Il est connu par le brevet FR 2.533.659 un collier de fixation de tuyauteries constitué de deux demi-colliers assemblés par des vis imperdables. Dans ce document, les vis sont rendues imperdables par l'intermédiaire d'un décolletage réalisé sous la tête de vis. Ces vis sont montées dans un trou oblong percé perpendiculairement à l'axe du tuyau sur les pattes latérales d'un demi-collier. Les bords du trou pénètrent dans le décolletage formé sur la vis. Lors du vissage, la largeur du trou oblong collabore avec la partie filetée de la vis. Une fois le décolletage de la vis obtenu en vis-à-vis des bords du trou oblong, une déformation du trou est réalisée de manière à rendre prisonnière la vis dans le trou oblong, c'est-à-dire à la rendre imperdable. Ce moyen n'est pas satisfaisant car il suppose une déformation de la patte lors de la mise en place de la vis. Ainsi dans le cas d'un serrage trop important des côtés du trou oblong, celui-ci est susceptible de bloquer la vis en rotation.

Il est connu aussi par le document FR 2.643.438, un collier simple de fixation de tuyauteries constitué de deux demi-colliers, un demi-collier fixé à la paroi et un demi-collier mobile qui vient serrer le tuyau sur le demi-collier fixe. Un orifice est formé sur les pattes du demi-collier mobile. Les bords du trou sont découpés et cambrés sur le demi-collier mobile vers la face extérieure, de manière à former deux languettes en regard l'une de l'autre. L'ouverture formée est d'un diamètre supérieur au diamètre du noyau de la vis et inférieur au diamètre nominal, ou encore diamètre sur filet de la vis. La partie non filetée de la vis, située juste en dessous de la tête de vis est amenée entre les languettes. Une pression sur la tête de vis contre les languettes a pour effet de rapprocher les languettes et de les serrer contre la partie non filetée de la vis.

Il est connu également par le brevet US 5 524 330 un procédé de capture d'une vis sur une plaque pour composant électronique. Ce document reprend en grande partie ce qui est décrit dans le brevet antérieur FR 2.643.438 pour rendre une vis imperdable à l'aide de sa partie non filetée, la fixation obtenue étant similaire dans les deux cas. La méthode propose tout d'abord le perçage d'un orifice avec un premier diamètre dans une plaque, ce premier diamètre correspondant au diamètre de la partie non filetée d'une vis. Puis des parties du matériau entourant l'orifice sont enlevées avec un outil de perforation de manière à former des languettes dirigées vers l'intérieur qui vont être cambrées d'un côté de la plaque de manière à élargir le diamètre de l'orifice et pouvoir insérer la vis du même côté de la plaque. L'appui à l'aide d'un outil sur la tête de vis a pour effet de rapprocher les languettes et de les serrer contre la partie non filetée de la vis.

L'inconvénient des deux derniers dispositifs précités réside dans le fait que la vis est rendue imperdable par l'intermédiaire de sa partie non filetée. En effet, l'ouverture a un diamètre seulement légèrement inférieur au diamètre nominal de la vis, ce qui peut provoquer la perte de la vis dans le cas d'un effort de traction trop important. D'un autre côté, un serrage trop important des languettes sur la partie non filetée de la vis, risque de bloquer la rotation de la vis.

De plus, si la longueur de la partie non filetée de la vis, située juste en dessous de la tête de vis est trop faible, les extrémités libres des languettes risquent de venir serrer le partie filetée de la vis, ce qui peut provoquer un blocage de la rotation de la vis par les languettes de la pièce à fixer.

La présente invention a donc pour objet de pallier les inconvénients de l'art antérieur en proposant un collier de fixation d'éléments cylindriques, notamment de tuyauteries, disposant d'un moyen rendant la vis parfaitement imperdable, tout en la maintenant libre en rotation.

Ce but est atteint par un collier de fixation de tuyauteries ou analogue constitué d'au moins deux éléments, l'un fixe, l'autre mobile, comprenant chacun une face extérieure opposée à une face intérieure orientée vers l'élément en vis-à-vis, au moins un premier élément, dit élément fixe, comportant un moyen de fixation et un deuxième élément à fixer, dit élément mobile, chaque élément comportant au moins une portion circulaire, chaque extrémité de la portion circulaire étant prolongée vers l'extérieur de la portion par une patte, les pattes extrêmes des deux éléments étant opposées deux à deux dans des plans parallèles pour permettre l'assemblage des deux éléments, qui prennent ainsi sensiblement la forme d'un cylindre prévu pour le passage du tuyau, une vis d'assemblage des deux éléments traversant une ouverture formée perpendiculairement aux plans parallèles, sur les pattes extrêmes de l'un des deux élément et venant collaborer avec un moyen formant écrou sur les pattes extrêmes de l'autre élément, caractérisé en ce que l'ouverture est continue et entourée d'un pourtour embouti formant un bossage qui fait saillie du côté opposé audit autre élément et en ce qu'il est susceptible d'être rabattu dans le plan des pattes et de se loger dans une gorge formée dans le corps de la vis à proximité de la tête et dont le diamètre est inférieur au diamètre du noyau de la vis, afin de rendre la vis imperdable et libre en rotation.

Selon une autre particularité, chaque élément comporte deux portions circulaires, reliées entre elles par une partie centrale, de manière à former un collier double, le moyen de fixation étant disposé sur la partie centrale.

Selon une autre particularité, l'ouverture est un trou oblong, le bord intérieur du pourtour étant constitué par le bord du trou oblong, la largeur du trou oblong étant supérieure au diamètre de la gorge et inférieure au diamètre nominal de la vis lorsque le pourtour est rabattu dans le plan des pattes.

Selon une autre particularité, le pourtour en saillie fait un angle de 45° par rapport au plan formé par les pattes.

Selon une autre particularité, le moyen de fixation est constitué d'un écrou serti sur la face extérieure de l'élément fixe.

Selon une autre particularité, l'élément fixe dispose de bossages placés à proximité des extrémités de la portion circulaire, la distance séparant deux bossages en vis à vis étant inférieure au diamètre du tuyau à fixer.

Selon une autre particularité, la portion circulaire de l'élément fixe est supérieure à un demi-cercle, les bossages étant disposés sur les parties de la portion circulaire qui dépassent le demi-cercle.

Selon une autre particularité, un jonc de renfort est formé par emboutissage sur la face extérieure de chaque élément, créant une rainure sur la face intérieure de chaque élément.

Selon une autre particularité, les bossages sont formés de part et d'autre de la rainure.

Selon une autre particularité, la gorge est usinée juste sous la tête de vis.

Un autre but de l'invention est de proposer un procédé pour mettre en oeuvre le dispositif de l'invention.

Ce deuxième but est atteint par un procédé pour rendre une vis imperdable sur une pièce à fixer, caractérisé en ce qu'il comprend les étapes suivantes :
- formation sur une pièce d'un orifice et emboutissage du pourtour de l'orifice d'un angle suffisant pour que les dimensions de cet orifice déformé soient suffisantes pour permettre le passage du corps de la vis, sans laisser passer la tête de vis.
- mise en place de la vis, de manière à ce que le pourtour de l'orifice, qui forme un bossage, se trouve en vis-à-vis d'une gorge usinée sur la périphérie de la vis et d'un diamètre inférieur au diamètre du noyau de la vis,
- sertissage par pression d'une matrice sur le bossage formé par le pourtour de l'orifice et maintien de la vis, le pourtour de l'orifice étant ramené dans le plan de la pièce.

Selon une autre particularité, le procédé comprend les étapes suivantes :
- découpe d'un orifice oblong sur une pièce, la largeur de l'orifice étant supérieure au diamètre de la gorge et inférieure au diamètre nominal de la vis,
- déformation du pourtour de l'orifice oblong par cambrage vers l'intérieur ou l'extérieur du plan formé par la pièce, d'un angle de déformation suffisant pour assurer le passage du corps de la vis,
- rentrée de la vis avec léger sertissage et positionnement de la gorge de la vis en face du pourtour,
- sertissage de la pièce sur la vis par pression sur le pourtour, de manière à aplanir le pourtour dont le bord intérieur vient se loger dans la gorge.

Selon une autre particularité, l'angle de déformation du pourtour est sensiblement de 45°.

Selon une autre particularité, le bossage est orienté dans le même sens que le sens de l'introduction du corps de la vis.

L'invention concerne également une utilisation du procédé pour fabriquer des colliers de fixation de tuyauteries ou analogue, ce procédé étant appliqué au pattes des éléments mobiles.

Selon une autre particularité, le procédé est également appliqué audit colliers de fixation de tuyauteries ou analogue comportant un caoutchouc.

Selon une autre particularité, le caoutchouc comporte un relief qui pénètre dans le jonc de renfort.

L'invention, avec ses caractéristiques et avantages, ressortira plus clairement à la lecture de la description faite en référence aux dessins annexés dans lesquels :
- la figure 1 représente en vue de dessus, un collier simple conforme à l'invention,
- la figure 2 représente en vue de dessus, un collier double conforme à l'invention,
- les figures 3a à 3d représentent les étapes successives du procédé pour parvenir à l'invention.

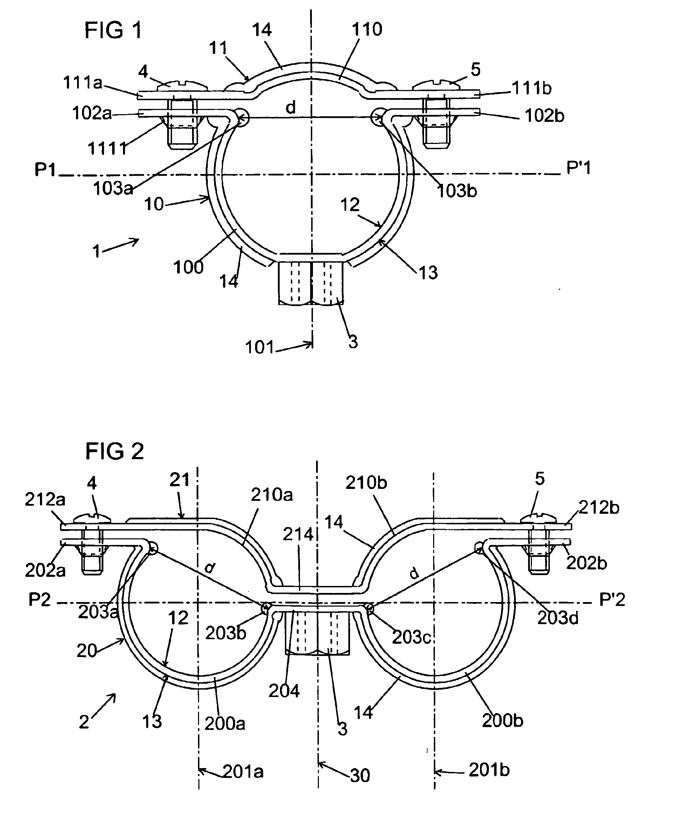

Le collier selon l'invention peut être simple, comme représenté figure 1, ou double, comme représenté figure 2.

Selon la figure 1, le collier simple (1) est constitué de deux demi-colliers (10, 11) complémentaires. Il est constitué d'un demi-collier, dit fixe (10), destiné à être fixé sur un support fixe sur lequel on souhaite faire passer le tuyau tel que, par exemple, un mur, et d'un demi-collier, dit mobile (11), destiné à venir serrer le tuyau contre le demi-collier fixe (10). Les deux demi-colliers (10, 11) sont élaborés à partir de deux bandes métalliques. Les deux bandes possèdent deux faces principales, une face destinée à être en contact avec l'élément cylindrique à fixer, dite face intérieure (12), et une deuxième face, dite face extérieure (13).

Le demi-collier fixe (10) est constitué d'une portion circulaire (100) s'étendant symétriquement de part et d'autre de l'axe (101) vertical passant par le centre de la portion circulaire (100). L'axe (101) constitue l'axe de symétrie du collier simple (1). Le diamètre de la portion circulaire (100) est sensiblement égal au diamètre du tuyau à fixer. La distance d entre les deux extrémités de la portion circulaire (100) a une longueur inférieure au diamètre du tuyau à fixer. Les extrémités de la portion circulaire (100) sont disposées selon un angle allant de 1 à 10° par rapport au plan horizontal P1P'1 passant par le centre de la portion circulaire (100) du demi-collier fixe (10).

Un moyen de fixation du demi-collier fixe (10) sur le support fixe est formé sur la face extérieure (13) de celui-ci. Un perçage est effectué symétriquement par rapport à l'axe de symétrie (101) du collier (1) au niveau de la portion circulaire (100). Le moyen de fixation est, par exemple, un écrou (3) serti dans le perçage sur la face extérieure (13) du demi-collier fixe (10). Un jonc de renfort (14) est réalisé sur la face extérieure (13) de chaque demi-collier (10, 11), longitudinalement et sensiblement au milieu. Ce jonc est formé sur la portion circulaire (100) du demi-collier fixe de part et d'autre de l'écrou (3) serti sur la portion, par emboutissage par exemple. Il crée ainsi une rainure sur la face intérieure (12) de la portion circulaire (100) du demi-collier fixe (10).

A chaque extrémité de la portion circulaire (100) du demi-collier fixe (10), vers l'extérieur du collier (1), s'étend, dans un plan parallèle au plan P1P'1, une patte (102a, 102b) destinée à l'assemblage des deux demi-colliers (10, 11).

A proximité de chaque extrémité de la portion circulaire (100) du demi-collier fixe (10) est formé au moins un bossage (103a, 103b). La distance séparant deux bossages (103a, 103b) disposés chacun à proximité d'une extrémité de la portion circulaire (100) est inférieure au diamètre du tuyau à fixer, de manière à pouvoir maintenir le tuyau dans le demi-collier fixe (10) pendant que l'utilisateur fixe le demi-collier mobile (11) sur le demi-collier fixe (10) pour serrer le tuyau contre la face intérieure (12) du demi-collier fixe (10). Deux bossages sont, par exemple, réalisés de part et d'autre de la rainure à chaque extrémité de la portion circulaire (100).

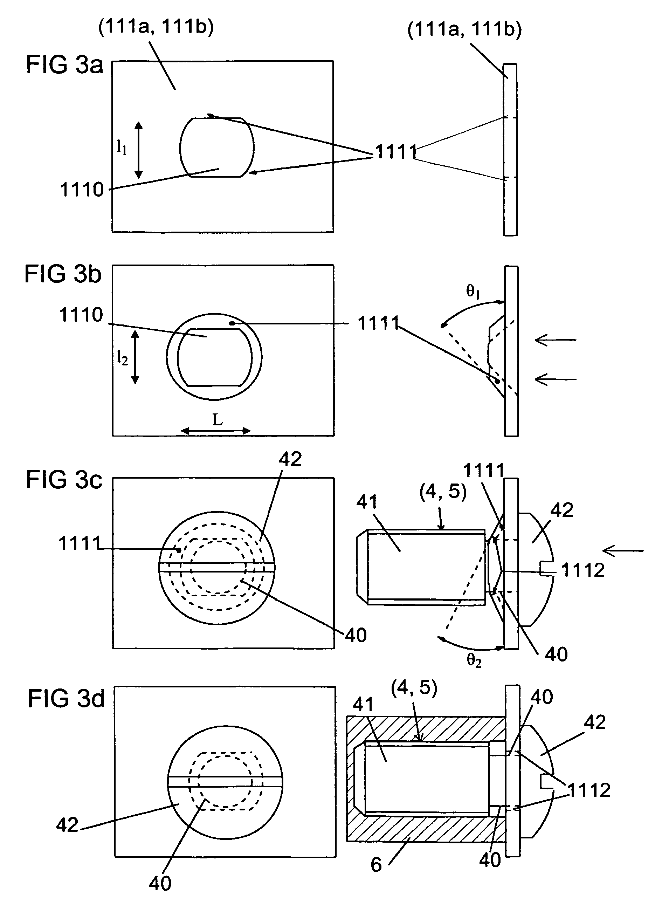

Sur chaque patte (102a, 102b) du demi-collier fixe (10) est effectué une découpe par poinçonnage d'un orifice (1110), par exemple circulaire. Le diamètre du trou ainsi formé est inférieur au noyau d'une vis (4,5). Le pourtour (1111) de l'orifice (1110) subit un emboutissage pour agrandir légèrement le diamètre de l'orifice (1110) qui devient supérieur au diamètre nominal de la vis (4,5) et permettre ainsi le passage de la vis (4,5). Le pourtour (1111) embouti forme un bossage. Dans un mode de réalisation de l'invention, le bossage formé est orienté dans le sens correspondant au sens d'introduction de la vis (4,5), comme représenté par les flèches des figures 3b et 3c.

Le demi-collier mobile (11) est constitué d'une portion circulaire (110), complémentaire à la portion circulaire (100) du demi-collier fixe (10). Cette portion circulaire (110), comme pour le demi-collier fixe (10), est surmontée d'un jonc de renfort (14) qui crée une rainure sur la face intérieure (12) du demi-collier mobile (11). Le demi-collier mobile (11) comporte aussi deux pattes (111a, 111b) s'étendant vers l'extérieur du demi-collier mobile (11) dans le prolongement des extrémités de la portion circulaire (110) et dans un plan parallèle au plan P1P'1. L'assemblage du demi-collier fixe (10) et du demi-collier mobile (11) se fait par leurs pattes (102a, 102b, 111a, 111b), parallèles deux à deux, grâce à deux vis de fixation (4, 5). Lorsque les deux demi-colliers (10, 11) sont assemblés, ils forment le collier simple (1) ayant la forme d'un cylindre.

Dans une forme de réalisation de l'invention, chaque patte (111a, 111b) du demi-collier mobile (11) est percée d'un trou oblong (1110), comme représenté figure 3a. La largeur initiale (I₁) du trou oblong est inférieure au diamètre du noyau d'une vis de fixation (4, 5) et supérieure au diamètre d'une gorge (40) usinée sur la périphérie du corps (41) de la vis (4, 5), juste en dessous de la tête (42) de vis (4, 5). Le pourtour (1111) du trou oblong (1110) est embouti d'une manière telle que ce pourtour soit cambré vers l'intérieur de la patte (111a, 111b), comme représenté figure 3b. Le pourtour (1111) déformé de la sorte a une nouvelle largeur (I₂) supérieure à sa largeur initiale (I₁) et fait un premier angle (θ₁) déterminé par rapport au plan formé par les pattes (111a, 111b). Dans un mode de réalisation de l'invention, ce premier angle (θ₁) est compris entre 30° et 70°, prenant par exemple la valeur de 45° ; dans le cas d'une vis (4,5) dont le noyau mesure un peu plus de 4 mm, la largeur initiale (I₁) du trou oblong, d'une longueur initiale (L) de 5 mm, peut être par exemple de 4 mm et la nouvelle largeur (I₂) de 5 mm.

Le pourtour (1111) du trou oblong (1110) est embouti de manière à ce que la surface entourée par le bord intérieur (1112) dudit pourtour (1111) soit suffisante pour laisser passer la partie filetée de la vis de fixation (4, 5) et trop petite pour laisser passer la tête (42) de la vis (4, 5). La vis (4, 5) est mise en place de façon à ce que la gorge (40) se trouve en vis-à-vis du bord intérieur (1112) dudit pourtour (1111) et à ce que ledit bord intérieur (1112) vienne en appui sur la face inférieure de la tête (42) de la vis (4, 5). Ce bord intérieur (1112) est, en effet, destiné à collaborer avec la gorge (40), comme représenté sur la figure 3c. Le positionnement de la vis (4,5) s'accompagne aussi d'un léger sertissage qui réduit l'inclinaison du pourtour (1111) en saillie. Ce léger sertissage réduit l'ouverture dudit premier angle (θ₁) pour former un deuxième angle (θ₂). Par exemple pour un premier angle (θ₁) de 45°, le léger sertissage conduit à un second angle (θ₂) de 30°. Un sertissage final est ensuite effectué par l'intermédiaire d'une matrice (6), c'est à dire qu'une pression est exercée sur ledit pourtour (1111), de manière à provoquer le rabattement du pourtour (1111) dans sa position initiale, avec rabattement de son bord intérieur (1112) à l'intérieur de la gorge (40) de la vis (4,5). La pression est donc exercée jusqu'à un retour du pourtour (1111) du trou oblong (1110) dans le plan des pattes (111a, 111b) du demi-collier mobile (11), comme représenté figure 3d. Comme le diamètre de la gorge (40) est sensiblement inférieur à la largeur du trou oblong (1110), qui est, elle-même, inférieure au diamètre du noyau de la vis (4, 5), la vis (4, 5) est rendue imperdable et libre en rotation.

La fixation d'un tuyau sur un support fixe à partir d'un collier simple (1) selon l'invention, s'effectue de la manière suivante. Le demi-collier fixe (10) est fixé au support par l'intermédiaire de son écrou (3) serti. Le tuyau est ensuite placé entre les bossages (103a, 103b) pour être maintenu. Les bossages (103a, 103b) permettent d'éviter à l'utilisateur de tenir continuellement le tuyau lors de la fixation de celui-ci. Ensuite l'utilisateur vient serrer le demi-collier mobile (11) contre le tuyau en le vissant sur le demi-collier fixe (10). Chaque vis (4, 5) de fixation, rendue imperdable dans son orifice oblong (1110) percé sur une des deux pattes (111a, 111b) du demi-collier mobile (11), est vissée à l'intérieur du pourtour (1111) de l'orifice oblong (1110) en saillie par rapport au plan des pattes (102) du demi-collier fixe (10). La vis (4, 5) est vissée jusqu'à serrage complet du tuyau entre les deux demi-colliers (10, 11).

Selon la figure 2, le collier double (2) permet la fixation de deux tuyaux sur un support fixe. Selon cette réalisation, chaque demi-collier (20, 21) dispose de deux portions circulaires, (200a, 200b) pour le demi-collier fixe (20) et (210a, 210b) pour le demi-collier mobile (21), reliées par une portion plane, respectivement (204) pour le demi-collier fixe (20) et (214) pour le demi-collier mobile (21). L'écrou (3) est alors serti sur la face extérieure (13) de la portion plane (201) du demi-collier fixe (20), son axe de symétrie (30) passant par le milieu de la portion plane (204) du demi-collier fixe (20). Le collier est symétrique par rapport à l'axe de symétrie (30) de l'écrou (3). Chaque demi-collier (20, 21) dispose de deux pattes, (202a, 202b) pour le demi-collier fixe (20) et (212a, 212b) pour le demi-collier mobile (21), pour l'assemblage des deux demi-colliers (20, 21). Elles sont situées dans le prolongement des deux extrémités les plus éloignées des deux portions circulaires, (200a, 200b, 210a, 210b) dans un plan parallèle au plan P2P'2 horizontal passant par les centres des deux portions circulaires (200a, 200b). Chaque portion circulaire (200a, 200b, 210a, 210b) est surmontée d'un jonc de renfort (14) formé par emboutissage, créant une rainure sur la face intérieure (12) de chaque portion circulaire (200a, 200b, 210a, 210b).

Chaque portion circulaire (200a, 200b) du demi-collier fixe (20) n'est pas disposée symétriquement par rapport à l'axe (201a, 201b) vertical passant par les centres des deux portions circulaires (200a, 200b). En effet, chaque extrémité de chaque portion circulaire (200a, 200b), située à proximité de la patte (202a, 202b) d'assemblage du demi-collier fixe (20), est dans un plan parallèle au plan (P2P'2) supérieur au plan passant par l'autre extrémité de la portion circulaire (200a, 200b). La distance d entre deux extrémités d'une portion circulaire (200a, 200b) du demi-collier fixe (20) est toujours inférieure au diamètre du tuyau à fixer.

A chaque extrémité de chaque portion circulaire (200a, 200b) du demi-collier fixe (20) est placé un bossage (203a, 203b, 203c, 203d), ces bossages sont destinés, comme pour le collier simple (1), à maintenir le tuyau en place avant sa fixation.

Le dispositif de fixation à vis imperdables des deux demi-colliers doubles entre eux est le même que celui utilisé pour fixer les deux demi-colliers simples entre eux, il ne sera donc pas décrit.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé pour rendre une vis (4, 5) imperdable sur une pièce à fixer, comportant une étape de formation sur une pièce d'un orifice et une étape d'emboutissage du pourtour (1111) de l'orifice d'un angle (θ₁) suffisant pour que les dimensions de cet orifice soient suffisantes pour permettre le passage du corps (41) de la vis (4, 5), sans laisser passer la tête de vis (42), **caractérisé en ce qu**'il comprend les étapes suivantes :
- mise en place de la vis (4, 5), de manière à ce que le pourtour (1111) de l'orifice, qui forme un bossage, se trouve en vis à vis d'une gorge (40) usinée sur la périphérie de la vis (4, 5), la gorge (40) ayant un diamètre inférieur au diamètre du noyau de la vis (4, 5),
- sertissage par pression d'une matrice sur ledit bossage formé par le pourtour (1111) de l'orifice et maintien de la vis (4, 5), le pourtour (1111) de l'orifice étant ramené dans le plan de la pièce et laissant la vis (4, 5) libre en rotation.

2. Procédé pour rendre une vis (4, 5) imperdable selon la revendication 1, **caractérisé en ce qu'**il comprend les étapes suivantes :
- découpe d'un orifice oblong (111D) sur une pièce, la largeur de l'orifice (1110) étant supérieure au diamètre de la gorge (40) et inférieure au diamètre nominal de la vis,
- déformation du pourtour (1111) de l'orifice oblong (1110) par cambrage vers l'intérieur ou l'extérieur du plan formé par la pièce, d'un angle de déformation (θ₁) suffisant pour assurer le passage du corps de la vis (4,5),
- rentrée de la vis avec léger sertissage et positionnement de la gorge (40) de la vis (4, 5) en face du pourtour (1111),
- sertissage de la pièce sur la vis (4. 5) par pression sur le pourtour (1111), de manière à aplanir le pourtour (1111) dont le bord intérieur (1112) vient se loger dans la gorge (40).

3. Procédé selon la revendication 1 ou 2, **caractérisé en ce que** l'angle (θ₁) de déformation du pourtour est sensiblement de 45°.

4. Procédé selon l'une quelconque des revendications 1 à 3, **caractérisé en ce que** le bossage est orienté dans le même sens que le sens de l'introduction du corps (41) de la vis (4,5).

5. Collier de fixation de tuyauteries ou analogue constitué d'au moins deux éléments, l'un fixe, l'autre mobile, comprenant chacun une face extérieure (13) opposée à une face intérieure (12) orientée vers l'élément en vis-à-vis, au moins un premier élément, dit élément fixe, comportant un moyen de fixation et un deuxième élément, dit élément mobile, chaque élément comportant au moins une portion circulaire (100, 110), chaque extrémité de la portion circulaire (100, 110) étant prolongée vers l'extérieur de la portion (100, 110) par une patte (102a, 102b, 111a, 111b), les pattes extrêmes des deux éléments étant opposées deux à deux dans des plans parallèles pour permettre l'assemblage des deux éléments, qui prennent ainsi sensiblement la forme d'un cylindre prévu pour le passage du tuyau, une vis (4, 5) d'assemblage des deux éléments traversant une ouverture formée perpendiculairement aux plans parallèles, sur les pattes (111a, 111b) extrêmes de l'un des deux éléments et venant collaborer avec un moyen formant écrou sur les pattes (102a, 102b) extrêmes de l'autre élément, **caractérisé en ce que** l'ouverture est continue et entourée d'un pourtour (1111) embouti formant un bossage qui fait saillie du côté opposé audit autre élément et **en ce qu'**il est susceptible d'être rabattu dans le plan des pattes (111 a, 111b) et de se loger dans une gorge (40) formée dans le corps (41) de la vis (4, 5) à proximité de la tête (42) et dont le diamètre est inférieur au diamètre du noyau de la vis (4, 5), afin de rendre la vis (4, 5) imperdable et libre en rotation.

6. Collier de fixation de tuyauteries ou analogue selon la revendication 5, **caractérisé en ce que** chaque élément comporte deux portions circulaires (200a, 200b, 210a, 210b), reliées entre elles par une partie centrale (204, 214), de manière à former un collier double (2), le moyen de fixation étant disposé sur la partie centrale (204, 214).

7. Collier de fixation de tuyauteries ou analogue selon la revendication 5 ou 6, **caractérisé en ce que** l'ouverture est un trou oblong (1110), le bord intérieur (1112) du pourtour (1111) étant constitué par le bord du trou oblong (1110), la largeur du trou oblong (1110) étant supérieure au diamètre de la gorge (40) et inférieure au diamètre nominal de la vis (4, 5) lorsque le pourtour est rabattu dans le plan des pattes (111a, 111 b).

8. Collier de fixation de tuyauteries ou analogue selon la revendication 5, 6 ou 7, **caractérisé en ce que** le pourtour (1111) en saillie fait un angle (θ₁) de 45° par rapport au plan formé par les pattes.

9. Collier de fixation de tuyauteries ou analogue selon la revendication 5, 6 ou 7, **caractérisé en ce que** le moyen de fixation est constitué d'un écrou (3) serti sur la face extérieure (13) de l'élément fixe.

10. Collier de fixation de tuyauteries ou analogue selon la revendication 5, 6 ou 7, **caractérisé en ce que** l'élément fixe dispose de bossages (103a, 103b, 203a,b,c,d) placés à proximité des extrémités de la portion circulaire (100, 200a, 200b), la distance séparant deux bossages (103a, 103b, 203a,b,c,d) en vis à vis étant inférieure au diamètre du tuyau à fixer.

11. Collier de fixation de tuyauteries ou analogue selon la revendication 5, 6 ou 7 **caractérisé en ce que** la portion circulaire (100, 200a, 200b) de l'élément fixe est supérieure à un demi-cercle, les bossages (103a, 103b, 203a,b,c,d) étant disposés sur les parties de la portion circulaire qui dépassent le demi-cercle.

12. Collier de fixation de tuyauteries ou analogue selon la revendication 5 ou 6, **caractérisé en ce qu'**un jonc de renfort (14) est formé par emboutissage sur la face extérieure (13) de chaque élément, créant une rainure sur la face intérieure (12) de chaque élément.

13. Collier de fixation de tuyauteries ou analogue selon la revendication 12, **caractérisé en ce que** les bossages (103a, 103b, 203a,b,c,d) sont formés de part et d'autre de la rainure.

14. Collier de fixation de tuyauteries ou analogue selon la revendication 5, 6 ou 7, **caractérisé en ce que** la gorge (40) est usinée juste sous la tête (42) de vis (4, 5).

15. Utilisation du procédé selon l'une des revendications 1 à 4 pour fabriquer des colliers de fixation de tuyauteries ou analogue selon la revendication 5, 6 ou 7, **caractérisée en ce qu**'il est appliqué aux pattes (111a, 111b, 212a, 212b) des éléments mobiles (11, 21).

16. Utilisation du procédé selon la revendication 15, **caractérisée en ce que** le procédé est appliqué audits colliers de fixation de tuyauteries ou analogue comportant un caoutchouc.

17. Utilisation du procédé selon les revendications 12 et 16, **caractérisée en ce que** le caoutchouc comporte un relief qui pénètre dans le jonc de renfort (14).

## Claims

1. Method of making a screw (4, 5) captive on a part to be fixed, including a step of forming a hole on a part and a step of swaging the periphery (1111) of the hole at an angle (θ₁) which is sufficient so that the dimensions of this hole are sufficient to allow the body (41) of the screw (4, 5) to pass through without allowing the head of the screw (42) to pass through, **characterised in that** it comprises the following steps:
- positioning of the screw (4, 5) in such a way that the periphery (1111) of the hole which forms a boss is located opposite a groove (40) machined on the periphery of the screw (4, 5), the groove (40) having a diameter smaller than the diameter of the core of the screw (4, 5),
- pressure-crimping of a die on the said boss formed by the periphery (1111) of the hole and retaining the screw (4, 5), the periphery (1111) of the hole being brought into the plane of the part, and leaving the screw (4, 5) free to rotate.

2. Method of making a screw (4, 5) captive as claimed in Claim 1, **characterised in that** it comprises the following steps:
- cutting out an oblong hole (1110) on a part, the width of the hole (1110) being greater than the diameter of the groove (40) and smaller than the nominal diameter of the screw,
- deformation of the periphery (1111) of the oblong hole (1110) by cambering towards the interior or the exterior of the plane formed by the part, by an angle of deformation (θ₁) which is sufficient to ensure the passage of the body of the screw (4, 5),
- insertion of the screw with slight crimping and position of the groove (40) of the screw (4, 5) opposite the periphery (1111),
- crimping of the part on the screw (4, 5) by pressure on the periphery (1111) in such a way as to level out the periphery (1111) of which the inner edge (1112) comes to rest in the groove (40).

3. Method as claimed in Claim 1 or 2, **characterised in that** the angle (θ₁) of deformation of the periphery is substantially 45°.

4. Method as claimed in any one of Claims 1 to 3, **characterised in that** the boss is oriented in the same direction as the direction of introduction of the body (41) of the screw (4, 5).

5. Fixing collar for pipes or the like comprising at least two elements, one fixed and the other movable, each comprising an outer face (13) opposite an inner face (12) oriented towards the opposing element, at least one first element referred to as the fixed element having a fixing means and a second element referred to as the movable element, each element having at least one circular portion (100, 110), each end of the circular portion (100, 110) being extended towards the exterior of the portion (100, 110) by a tab (102a, 102b, 111a, 111 b), the end tabs of the two elements being opposed in pairs in parallel planes in order to enable assembly of the two elements which thereby assume substantially the shape of a cylinder provided for the passage of the pipe, a screw (4, 5) for assembling the two elements passing through an opening formed perpendicularly to the parallel planes on the end tabs (111a, 1111b) of one of the two elements and collaborating with a means forming a nut on the end tabs (102a, 102b) of the other element, **characterised in that** the opening is continuous and surrounded by a swaged periphery (1111) forming a boss which projects from the side opposite the other element, and **in that** it is capable of being bent over in the plane of the tabs (111a, 111b) and being accommodated in a groove (40) formed in the body (41) of the screw (4, 5) close to the head (42) and of which the diameter is smaller than the diameter of the core of the screw (4, 5) in order to make the screw captive and free to rotate.

6. Fixing collar for pipes or the like as claimed in Claim 4, **characterised in that** each element includes two circular portions (200a, 200b, 210a, 210b) connected to one another by a central part (204, 214) in such a way as to form a double collar (2), the fixing means being disposed on the central part (204, 214).

7. Fixing collar for pipes or the like as claimed in Claim 5 or 6, **characterised in that** the opening is an oblong hole (1110), the inner edge (1112) of the periphery (1111) being formed by the edge of the oblong hole (1110), the width of the oblong hole (1110) being greater than the diameter of the groove (40) and smaller than the nominal diameter of the screw (4, 5) when the periphery is bent over in the plane of the tabs (111a, 111b).

8. Fixing collar for pipes or the like as claimed in Claims 5, 6 or 7, **characterised in that** the projecting periphery (1111) forms an angle (θ₁) of 45° relative to the plane formed by the tabs.

9. Fixing collar for pipes or the like as claimed in Claims 5, 6 or 7, **characterised in that** the fixing means is formed by a nut (3) crimped onto the outer face (13) of the fixed element.

10. Fixing collar for pipes or the like as claimed in Claims 5, 6 or 7, **characterised in that** the fixed element has bosses (103a, 103b, 203a,b,v,d) placed close to the ends of the circular portion (100, 200a, 200b), the distance separating two opposing bosses (103a, 103b, 203a,b,c,d) being smaller than the diameter of the pipe to be fixed.

11. Fixing collar for pipes or the like as claimed in Claims 5, 6 or 7, **characterised in that** the circular portion (100, 200a, 200b) of the fixed element is greater than a semi-circle, the bosses (103a, 103b, 203a,b,c,d) being disposed on the parts of the circular portion which exceed the semi-circle.

12. Fixing collar for pipes or the like as claimed in Claims 5 or 6, **characterised in that** a reinforcing bead (14) is formed by swaging on the outer face (13) of each element, creating a groove on the inner face (12) of each element.

13. Collar for fixing pipes or the like as claimed in Claim 12, **characterised in that** the bosses (103a, 103b, 203a,b,c,d) are formed on either side of the groove.

14. Fixing collar for pipes or the like as claimed in Claims 5, 6 or 7, **characterised in that** the groove (40) is machined just below the head (42) of the screw (4, 5).

15. Use of the method as claimed in any one of Claims 1 to 4 to manufacture fixing collars for pipes or the like as claimed in Claims 5, 6 or 7, **characterised in that** it is applied to the tables (111 a, 111b, 212a, 212b) of the movable elements (11, 21).

16. Use of the method as claimed in Claim 15, **characterised in that** the method is applied to the said fixing collars for pipes or the like including a rubber band.

17. Use of the method as claimed in Claims 12 and 16, **characterised in that** the rubber band has a relief which penetrates into the reinforcing bead.

## Patentansprüche

1. Verfahren zum Unverlierbarmachen einer Schraube (4, 5) auf einem zu befestigenden Stück, aufweisend: einen Schritt zum Bilden einer Öffnung auf einem Stück und einen Schritt zum Tiefziehen des Außenumfangs (1111) der Öffnung in einem Winkel (θ₁), der ausreicht, dass die Abmessungen dieser Öffnung ausreichend sind, damit der Körper (41) der Schraube (4, 5) hindurchgehen kann, ohne dass der Schraubenkopf (42) hindurchgelassen wird, **dadurch gekennzeichnet, dass** es die folgenden Schritte aufweist:
- Anordnen der Schraube (4, 5), so dass der Außenumfang (1111) der Öffnung, der einen Vorsprung bildet, sich gegenüber einer Einkerbung (40) befindet, die auf dem Umfang der Schraube (4, 5) ausgearbeitet ist, wobei die Einkerbung (40) einen Durchmesser aufweist, der kleiner ist als der Durchmesser des Kerns der Schraube (4, 5),
- Drücken einer Matrize auf den Vorsprung, der von dem Umfang (1111) der Öffnung gebildet wird, und Halten der Schraube (4, 5), wobei der Außenumfang (1111) der Öffnung in die Ebene des Stücks zurückgebracht wird und die Schraube (4, 5) frei drehbar zurückgelassen wird.

2. Verfahren zum Unverlierbarmachen einer Schraube (4, 5) gemäß Anspruch 1, **dadurch gekennzeichnet, dass** es die folgenden Schritte aufweist:
- Herausschneiden einer länglichen Öffnung (1110) auf einem Stück, wobei die Weite der Öffnung (1110) größer ist als der Durchmesser der Einkerbung (40) und kleiner als der nominelle Durchmesser der Schraube,
- Verformen des Umfangs (1111) der länglichen Öffnung (1110) durch Durchbiegung in Richtung nach innen oder nach außen aus der Ebene, die von dem Stück gebildet wird, mit einem Verformungswinkel (θ₁), der ausreicht zum Sicherstellen des Passierens des Körpers der Schraube (4, 5),
- Einführen der Schraube mit leichtem Druck und Positionieren der Einkerbung (40) der Schraube (4, 5) gegenüber dem Außenumfang (1111),
- Drücken des Stücks auf die Schraube (4, 5) mittels Drucks auf den Außenumfang (1111), so dass der Außenumfang (1111) eingeebnet wird, dessen Innenrand (1112) in der Einkerbung (40) zu liegen kommt.

3. Verfahren gemäß Anspruch 1 oder 2, **dadurch gekennzeichnet, dass** der Verformungswinkel (θ₁) des Außenumfangs im Wesentlichen 45° beträgt.

4. Verfahren gemäß einem der Ansprüche 1 bis 3, **dadurch gekennzeichnet, dass** der Vorsprung in der gleichen Richtung ausgerichtet wird wie die Einführrichtung des Körpers (41) der Schraube (4, 5).

5. Befestigungsschelle für Rohrleitungen oder dergleichen, gebildet aus mindestens zwei Elementen, wobei das eine fest und das andere beweglich ist, wobei jedes eine Außenseite (13), die einer Innenseite (12) gegenüberliegt, die in Richtung zu dem gegenüberliegenden Element ausgerichtet ist, mindestens ein erstes als festes Element bezeichnetes Element, das ein Befestigungsmittel aufweist, und ein zweites als bewegliches Element bezeichnetes Element aufweist, wobei jedes Element mindestens einen kreisförmigen Abschnitt (100, 110) aufweist, wobei jedes Ende des kreisförmigen Abschnitts (100, 110) in Richtung von dem Abschnitt (100, 110) nach außen durch eine Klaue (102a, 102b, 111a, 111b) verlängert ist, wobei die äußeren Klauen der beiden Elemente einander paarweise in parallelen Ebenen gegenüberliegen, um das Zusammenbauen der beiden Elemente zu erlauben, die so im Wesentlichen die Form eines Zylinders annehmen, vorgesehen für das Passieren des Rohrs, wobei eine Schraube (4, 5) zum Zusammenbauen der beiden Elemente eine Öffnung durchquert, die senkrecht zu den parallelen Ebenen auf den äußeren Klauen (111a, 111b) des einen der beiden Elemente ausgebildet ist und mit einem Mittel zusammenwirkt, das eine Mutter auf den äußeren Klauen (102a, 102b) des anderen Elements bildet, **dadurch gekennzeichnet, dass** die Öffnung durchgehend ist und von einem tiefgezogenen Außenumfang (1111) umgeben ist, der einen Vorsprung bildet, der aus der dem anderen Element gegenüberliegenden Seite herausragt, und **dadurch**, dass er geeignet ist, in die Ebene der Klauen (111a, 111b) umgeklappt zu werden und in eine Einkerbung (40) eingesetzt zu werden, die in dem Körper (41) der Schraube (4, 5) in der Nähe des Kopfes (42) ausgebildet ist, und deren Durchmesser kleiner ist als der Durchmesser des Kerns der Schraube (4, 5), damit die Schraube (4, 5) unverlierbar und frei drehbar gemacht wird.

6. Befestigungsschelle für Rohrleitungen oder dergleichen gemäß Anspruch 5, **dadurch gekennzeichnet, dass** jedes Element zwei kreisförmige Abschnitte (200a, 200b, 210a, 210b) aufweist, die durch einen mittleren Teil (204, 214) so verbunden sind, dass eine Doppel-Schelle (2) gebildet wird, wobei das Befestigungsmittel auf dem mittleren Teil (204, 214) angeordnet ist.

7. Befestigungsschelle für Rohrleitungen oder dergleichen gemäß Anspruch 5 oder 6, **dadurch gekennzeichnet, dass** die Öffnung ein längliches Loch (1110) ist, wobei der Innenrand (1112) des Außenumfangs (1111) durch den Rand des länglichen Lochs (1110) gebildet wird, wobei die Weite des länglichen Lochs (1110) größer als der Durchmesser der Einkerbung (40) und kleiner als der nominelle Durchmesser der Schraube (4, 5) ist, wenn der Außenumfang in der Ebene der Klauen (111a, 111b) umgeklappt ist.

8. Befestigungsschelle für Rohrleitungen oder dergleichen gemäß Anspruch 5, 6 oder 7, **dadurch gekennzeichnet, dass** der hervorstehende Außenumfang (1111) im Verhältnis zu der von den Klauen gebildeten Ebene einen Winkel (θ₁) von 45° bildet.

9. Befestigungsschelle für Rohrleitungen oder dergleichen gemäß Anspruch 5, 6 oder 7, **dadurch gekennzeichnet, dass** das Befestigungsmittel aus einer Mutter (3) gebildet wird, die auf die Außenseite (13) des festen Elements gesetzt ist.

10. Befestigungsschelle für Rohrleitungen oder dergleichen gemäß Anspruch 5, 6 oder 7, **dadurch gekennzeichnet, dass** das feste Element Vorsprünge (103a, 103b, 203a, b, c, d) aufweist, die in der Nähe der Enden des kreisförmigen Abschnitts (100, 200a, 200b) angeordnet sind, wobei der Abstand, der zwei gegenüberliegende Vorsprünge (103a, 103b, 203a, b, c, d) trennt, kleiner ist als der Durchmesser des zu befestigenden Rohrs.

11. Befestigungsschelle für Rohrleitungen oder dergleichen gemäß Anspruch 5, 6 oder 7, **dadurch gekennzeichnet, dass** der kreisförmige Abschnitt (100, 200a, 200b) des festen Elements größer ist als ein Halbkreis, wobei die Vorsprünge (103a, 103b, 203a, b, c, d) auf den Teilen des kreisförmigen Abschnitts angeordnet sind, die über den Halbkreis hinausragen.

12. Befestigungsschelle für Rohrleitungen oder dergleichen gemäß Anspruch 5 oder 6, **dadurch gekennzeichnet, dass** ein Verstärkungselement (14) durch Tiefziehen auf der Außenseite (13) von jedem Element ausgebildet ist, wodurch auf der Innenseite (12) von jedem Element eine Nut gebildet wird.

13. Befestigungsschelle für Rohrleitungen oder dergleichen gemäß Anspruch 12, **dadurch gekennzeichnet, dass** die Vorsprünge (103a, 103b, 203a, b, c, d) auf beiden Seiten der Nut ausgebildet sind.

14. Befestigungsschelle für Rohrleitungen oder dergleichen gemäß Anspruch 5, 6 oder 7, **dadurch gekennzeichnet, dass** die Einkerbung (40) genau unter dem Kopf (42) der Schraube (4, 5) ausgearbeitet ist.

15. Verwendung des Verfahrens gemäß einem der Ansprüche 1 bis 4 zum Herstellen der Befestigungsschellen für Rohrleitungen oder dergleichen gemäß Anspruch 5, 6 oder 7, **dadurch gekennzeichnet, dass** es auf die Klauen (111a, 111b, 212a, 212b) der beweglichen Elemente (11, 21) angewendet wird.

16. Verwendung des Verfahrens gemäß Anspruch 15, **dadurch gekennzeichnet, dass** das Verfahren auf die Befestigungsschellen von Rohrleitungen oder dergleichen angewendet wird, die ein Gummi aufweisen.

17. Verwendung des Verfahrens gemäß den Ansprüchen 12 und 16, **dadurch gekennzeichnet dass** das Gummi ein Relief aufweist, das in das Verstärkungselement (14) eindringt.
